# EUROPÄISCHE PATENTSCHRIFT

(11) **EP 0 459 089 B1**
(45) Veröffentlichungstag und Bekanntmachung des Hinweises auf die Patenterteilung: **01.06.1994**
(21) Anmeldenummer: 91103092.2
(22) Anmeldetag: 01.03.1991
(51) Int. Cl.: D21B 1/32

(54) **Flotations-Deinking-Vorrichtung**
Flotation deinking system
Dispositif de désencrage par flottation

(30) Priorität: 30.05.1990 DE 4017446
(43) Veröffentlichungstag der Anmeldung: 04.12.1991
(73) Patentinhaber: Voith Sulzer Stoffaufbereitung GmbH, 88191 Ravensburg (DE)
(72) Erfinder: Britz, Herbert, W-7750 Konstanz (DE); Linck, Erich, Dr., W-7987 Weingarten (DE)

(56) Entgegenhaltungen:
- EP-A- 0 122 747
- DE-A- 3 529 638
- FR-A- 2 541 136
- US-A- 4 225 386

## Beschreibung

Die Erfindung bezieht sich auf eine Flotations-Deinking-Vorrichtung mit einem Flotationsbehälter und mindestens einem Einlaß zum Einbringen der Suspension in den Flotationsbehälter, der als Stufendiffusor ausgebildet ist, bei dem im Bereich des Stufensprungs eine Lufteinlaßöffnung ausgebildet ist, mit einem Gutstoffauslaß und einem Auslaß für den die angelagerten Farbpartikel tragenden Schaum.

Eine derartige Flotations-Deinking-Vorrichtung ist aus der DE-OS 35 29 638 bekannt. Hier wird ein zweistufiger Stufendiffusor zum Einbringen der Suspension beschrieben, bei dem entweder am in Strömungsrichtung vorgelagerten Stufensprung oder beiden Stufensprüngen Luft angesaugt wird, um diese der Suspension beizumischen, damit infolge einer Wirbelströmung kleine Luftblasen entstehen, an die sich die in der Suspension befindlichen Farbpartikel anlagern können.

Es sind bereits Flotationszellen bekannt, bei denen das Suspensions-Luftgemisch tangential in einen kreiszylindrischen Flotationsbehälter in horizontaler Richtung eingegeben wird. In diesem Flotationsbehälter schwimmen die im Diffusor gebildeten Luftbläschen, an die sich die Farbpartikel angelagert haben, als Schaum an die Oberfläche der im Flotationsbehälter befindlichen Suspension. Dort läuft der Schaum in einen zentralen Auslaß über. Am Boden des Flotationsbehälters wird die von den Farbpartikeln getrennte Suspension als Gutstoff abgezogen.

Es ist Aufgabe der Erfindung, eine Flotations-Deinking-Vorrichtung zu schaffen, mit der bei Aufrechterhaltung eines guten Wirkungsgrades Farbpartikel mit einer Partikelgröße im Bereich von ca. 60 µm bis mehrere 100 µm Durchmesser von der Suspension abgetrennt werden können.

Diese Aufgabe wird erfindungsgemäß dadurch gelöst, daß dem Stufensprung, in Strömungsrichtung gesehen, ein Turbulenzerzeuger ohne Luftzufuhr vorgelagert ist.

Durch die Vorlagerung des Turbulenzerzeugers besteht die Möglichkeit, die Flotations-Deinking-Vorrichtung so auszubilden, daß an dem nachgeordneten Stufensprung in ausreichender Zahl größere Luftbläschen erzeugt werden können, an die sich mit gutem Wirkungsgrad die genannten größeren Farbstoffpartikel besser anlagern können, und zwar weitgehend unabhängig von der Partikelgröße im genannten Bereich.

Als besonders einfache Variante des Turbulenzerzeugers kann ein weiterer Stufensprung innerhalb des Stufendiffusors genutzt werden. Die Durchmesservergrößerung dieses Stufensprungs beträgt vorzugsweise mindestens 3 mm.

Eine weitere Verbesserung der Aufgabenlösung gemäß Anspruch 1 ergibt sich dadurch, daß die Querschnitte vor und nach dem Stufensprung so bemessen sind, daß eine Abnahme der Suspensionsströmungsgeschwindigkeit um mindestens 3 m/sek. erfolgen kann.

Der Turbulenzerzeuger kann außer einem Stufensprung auch durch eine zur Turbulenz führende Verengung des Strömungsquerschnittes ausgebildet sein sowie durch einen statischen Mischer, dessen Einbauten zur Turbulenz führen.

Entsprechend einer vorteilhaften Weiterbildung kann der Stufendiffusor vertikal angeordnet sein und mit einer Umlenkung horizontal in den Flotationsbehälter münden. Diese Umlenkung führt zu einer zusätzlichen Vermischung der Suspension mit der Luft vor dem Einführen des Gemisches in den Flotationsbehälter, was die Anlagerung der Farbpartikel begünstigt.

Durch tangentiales Einmünden des Stufendiffusors in den Flotationsbehälter erzeugt man im Flotationsbehälter eine Rotationsbewegung der im Flotationsbehälter befindlichen Suspension mit der Folge eines besseren zentralen Abzugs des an der Oberfläche der Suspension aufschwimmenden, die Farbpartikel tragenden Schaums.

Damit die mit Schmutzpartikeln beladenen Luftblasen innerhalb des Flotationsbehälters auf kürzestem Wege nach oben aus der Suspension entweichen können, mündet der Stufendiffusor vorzugsweise dicht unterhalb der im Flotationsbehälter gebildeten Suspensionsoberfläche. Als vorteilhaftes Maß hat sich der Bereich von 0 bis 500 mm, vorzugsweise 50 bis 250 mm, als Abstand zwischen Oberkante des Stufendiffusors und der Suspensionsoberfläche erwiesen.

Dies ist besonders für das Abscheiden von großen Farbpartikeln wichtig. Große Partikel bieten nämlich der umgebenden Suspension eine große Angriffsfläche. Sie neigen deshalb stärker dazu, in dem elastischen Netzwerk der Fasern an der Fasersuspension hängen zu bleiben und abgerissen zu werden. Außerdem können auch die Kräfte der umgebenden Suspensionsströmung zum Abreißen führen.

Zweckmäßigerweise können mehrere Stufendiffusoren nebeneinander angeordnet sein.

Die Erfindung wird nachfolgend anhand der in den Zeichnungen rein schematisch dargestellten Ausführungsbeispiele näher erläutert. Es zeigt:
- Fig. 1: eine schematische Längsschnittansicht einer Flotations-Deinking-Vorrichtung,
- Fig. 2: eine Draufsicht auf die Vorrichtung gemäß Fig. 1,
- Fig. 3: eine schematische Darstellung eines Stufendiffusors und
- Fig. 4: eine schematische Darstellung eines etwas abgewandelten Stufendiffusors.

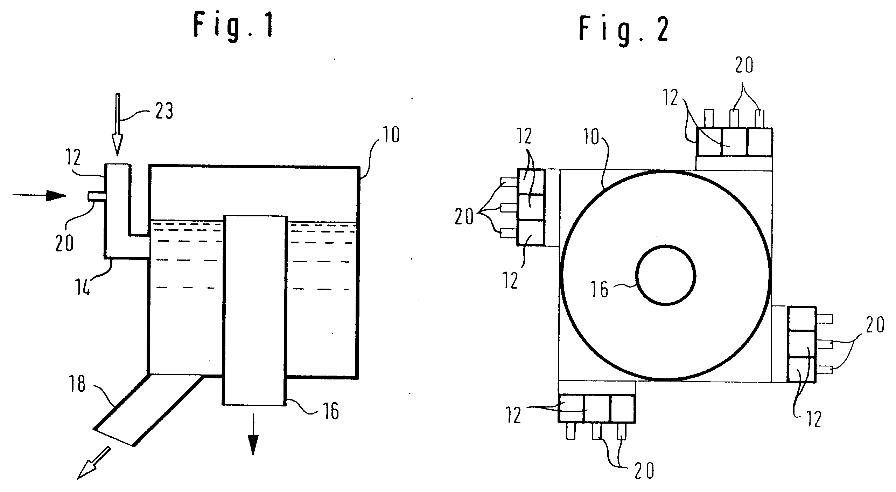

Die in Fig. 1 dargestellte Flotations-Deinking-Vorrichtung umfaßt einen Flotationsbehälter 10 mit einem Einlaß für den Graustoff bzw. die Fasersuspension, die noch mit den Farbpartikeln versetzt ist. Dieser Einlaß ist, wenn dies aus Fig. 1 auch nicht erkennbar ist, als Stufendiffusor 12 ausgebildet. Dieser Stufendiffusor 12 ist vertikal angeordnet und mündet mit einer Umlenkung 14 in der dargestellten Weise horizontal in den Flotationsbehälter 10, wobei natürlich auch das Einmünden in einem anderen Winkel als 90° zur Vertikalen denkbar ist. Wie der Fig. 2 zu entnehmen ist, sind mehrere Einlässe, hier drei, nebeneinander so angeordnet, daß diese tangential in den kreiszylindrischen Flotationsbehälter 10 münden.

Wie der Fig. 1 zu entnehmen ist, mündet der Einlaß dicht unterhalb der im Flotationsbehälter 10 ausgebildeten Suspensionsoberfläche in den Flotationsbehälter 10.

Zentral in der Mitte des Flotationsbehälters befindet sich ein Schaumabzrugsrohr 16 und im Boden des Flotationsbehälters 10 radial außerhalb des Schaumabzugsrohres 16 ein Gutstoff-Austragsrohr 18.

Seitlich des Einlasses befindet sich ein Lufteinlaß 20.

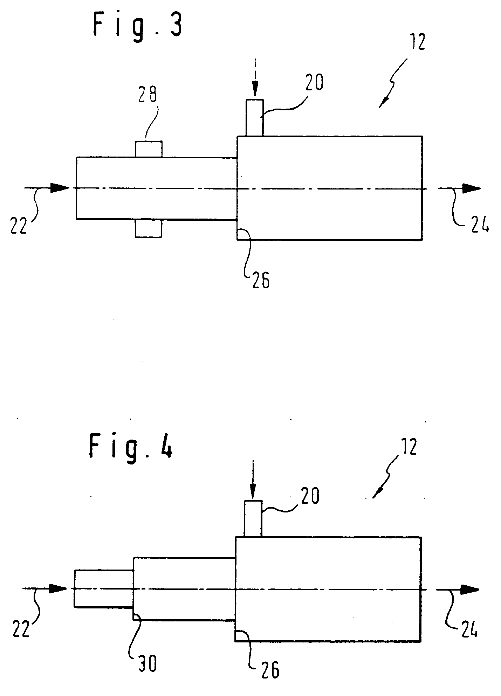

Der Fig. 3 und 4 ist in schematischer Ansicht der Aufbau des Stufendiffusors 12 zu entnehmen. Die Strömungsrichtung durch den Stufendiffusor ist durch die Pfeile 22 und 24 gekennzeichnet. Im Bereich des Stufensprungs 26, d.h. dort, wo sich der Strömungsquerschnitt erweitert, befindet sich der Lufteinlaß 20. Dem Stufensprung 26 in Strömungsrichtung vorgelagert ist ein nur schematisch in Fig. 3 angedeuteter Turbulenzerzeuger 28 vorgelagert. In Fig. 4 wird dieser Turbulenzerzeuger von einem vorgelagerten Stufensprung 30 gebildet.

Nachfolgend wird die Funktionsweise der Vorrichtung beschrieben.

Der Graustoff bzw. die Fasersuspension, die noch mit den Farbpartikeln versetzt ist, wird entsprechend dem Pfeil 22 in den Stufendiffusor 12 eingegeben. Im Bereich des Turbulenzerzeugers wird in der Suspensionsströmung eine Wirbelbildung hervorgerufen. Mit dieser Wirbelbildung gelangt die Suspensionsströmung in den Bereich des Stufensprunges 26, wo hier durch Ansaugeffekt, Luft in die Suspensionsströmung eingebracht wird, um dort ausreichend viele und ausreichend große Luftblasen zu erzeugen, an die sich beim Vermischen der Luft mit der Suspension die in der Suspension befindlichen Farbstoffpartikel der Größenordnung bis zu mehreren 100 µm Durchmesser anlagern können.

Diese Suspension-Luftmischung wird dann tangential in den Flotationsbehälter 10 eingegeben mit der Folge, daß die Luftblasen mit den angelagerten Farbpartikeln auf kürzestem Wege an der Oberfläche aufschwimmen und dann in das Schaumabzugsrohr 16 überlaufen. Dieser Überlaufvorgang im Zentrum des Flotationsbehälters wird durch die Rotationsströmung innerhalb des Flotationsbehälters gefördert. Der von den Farbpartikeln weitgehend gereinigte Gustoff wird am Boden des Flotationsbehälters über das Austragsrohr 18 abgezogen.

## Patentansprüche

1. Flotations-Deinking-Vorrichtung mit einem Flotationsbehälter (10) und mindestens einem Einlaß zum Einbringen der Suspension in den Flotationsbehälter (10), der als Stufendiffusor (12) ausgebildet ist, bei dem im Bereich des Stufensprungs (26) eine Lufteinlaßöffnung ausgebildet ist, mit einem Gutstoffauslaß (18) und einem Auslaß (16) für den die angelagerten Farbpartikel tragenden Schaum, **dadurch gekennzeichnet,** daß dem Stufensprung (26) in Strömungsrichtung gesehen ein Turbulenzerzeuger (28; 30) ohne Luftzufuhr vorgelagert ist.

2. Flotations-Deinking-Vorrichtung nach Anspruch 1, **dadurch gekennzeichnet,** daß der Turbulenzerzeuger als Stufensprung (30) ausgebildet ist.

3. Flotations-Deinking-Vorrichtung nach Anspruch 2, **dadurch gekennzeichnet,** daß die Durchmesservergrößerung des Stufensprungs (30) mindestens 3 mm beträgt.

4. Flotations-Deinking-Vorrichtung nach Anspruch 2 oder 3, **dadurch gekennzeichnet**, daß die Querschnitte vor und nach dem Stufensprung (30) so bemessen sind, daß eine Abnahme der Suspensionsströmungsgeschwindigkeit um mindestens 3 m/sek. erfolgen kann.

5. Flotations-Deinking-Vorrichtung nach Anspruch 1, **dadurch gekennzeichnet,** daß der Turbulenzerzeuger als eine zur Turbulenz führende Verengung des Strömungsquerschnittes ausgebildet ist.

6. Flotations-Deinking-Vorrichtung nach Anspruch 1, **dadurch gekennzeichnet,** daß der Turbulenzerzeuger als statischer Mischer ausgebildet ist, dessen Einbauten zur Turbulenz führen.

7. Flotations-Deinking-Vorrichtung nach einem der Ansprüche 1 bis 6, **dadurch gekennzeichnet**, daß der Stufendiffusor (12) vertikal angeordnet ist und mit einer Umlenkung (14) horizontal in den Flotationsbehälter (10) mündet.

8. Flotations-Deinking-Vorrichtung nach Anspruch 7, **dadurch gekennzeichnet,** daß der Stufendiffusor (12) tangential in den Flotationsbehälter (10) mündet.

9. Flotations-Deinking-Vorrichtung nach einem der Ansprüche 1 bis 8, **dadurch gekennzeichnet**, daß der Stufendiffusor (12) bzw. die Umlenkung (14) dicht unterhalb der im Flotationsbehälter (10) gebildeten Suspensionsoberfläche in den Flotationsbehälter (10) mündet.

10. Flotations-Deinking-Vorrichtung nach einem der Ansprüche 1 bis 5, **dadurch** **gekennzeichnet**, daß mehrere Stufendiffusoren (12) nebeneinander angeordnet sind.

## Claims

1. A flotation-deinking apparatus with a flotation container (10) and at least one inlet for introducing the suspension into the flotation container (10), which is designed as a step diffusor (12), in which an air inlet opening is formed in the region of the step (26), with an outlet (18) for accepted stock and an outlet (16) for the foam carrying the attached ink particles, characterised in that a turbulence generator (28; 30) without an air supply precedes the step (26), viewed in the direction of flow.

2. A flotation-deinking apparatus according to Claim 1, characterised in that the turbulence generator is designed as a step (30).

3. A flotation-deinking apparatus according to Claim 2, characterised in that the increase in diameter of the step (30) is at least 3 mm.

4. A flotation-deinking apparatus according to Claim 2 or 3, characterised in that the cross-sections before and after the step (30) are dimensioned such that a decrease in the rate of flow of the suspension by at least 3 m/sec can take place.

5. A flotation-deinking apparatus according to Claim 1, characterised in that the turbulence generator is designed as a restriction in the flow cross-section which leads to turbulence.

6. A flotation-deinking apparatus according to Claim 1, characterised in that the turbulence generator is designed as a static mixer, the baffles of which lead to turbulence.

7. A flotation-deinking apparatus according to one of Claims 1 to 6, characterised in that the step diffusor (12) is arranged vertically and opens horizontally into the flotation container (10) with a deflection means (14).

8. A flotation-deinking apparatus according to Claim 7, characterised in that the step diffusor (12) opens tangentially into the flotation container (10).

9. A flotation-deinking apparatus according to one of Claims 1 to 8, characterised in that the step diffusor (12) or the deflection means (14) opens into the flotation container (10) closely beneath the surface of the suspension formed in the flotation container (10).

10. A flotation-deinking apparatus according to one of Claims 1 to 5, characterised in that a plurality of step diffusors (12) are arranged next to one another.

## Revendications

1. Dispositif de désencrage par flottation avec un récipientde flottation (10) et au moins un accès pour l'introduction de la suspension dans le récipient de flottation (10), lequel est sous la forme d'un diffuseur (12) à gradins, dans lequel une ouverture d'admission d'air est ménagée dans la zone du ressaut à gradin (26), avec un orifice d'évacuation (18) de la pâte épurée et un orifice d'évacuation (16) pour la mousse chargée de particules colorées fixées,
**caractérisé** en ce qu'un générateur de turbulence (28; 30) sans apport d'air est disposé en amont du ressaut à gradin (26), en étant vu dans le sens de circulation.

2. Dispositif de désencrage par flottation selon la revendication 1, caractérisé en ce que le générateur de turbulence est sous la forme d'un ressaut à gradin (30).

3. Dispositif de désencrage par flottation selon la revendication 2, caractérisé en ce que l'agrandissement de diamètre du ressaut à gradin (30) est d'au moins 3 mm.

4. Dispositif de désencrage par flottation selon la revendication 2 ou 3, caractérisé en ce que les sections transversales avant et après le ressaut à gradin (30) sont telles qu'il peut en résulter une diminution de la vitesse d'écoulement de la suspension d'au moins 3 m par seconde.

5. Dispositif de désencrage par flottation selon la revendication 1, caractérisé en ce que le générateur de turbulence est sous la forme d'un étranglement de la section d'écoulement, donnant lieu à de la turbulence.

6. Dispositif de désencrage par flottation selon la revendication 1, caractérisé en ce que le générateur de turbulence est sous la forme d'un mélangeur statique dont les éléments incorporés donnent lieu à de la turbulence.

7. Dispositif de désencrage par flottation selon une des revendications 1 à 6, caractérisé en ce que le diffuseur à gradins (12) est disposé verticalement et débouche horizontalement dans le récipient de flottation (10) par l'intermédiaire d'une déviation (14).

8. Dispositif de désencrage par flottation selon la revendication 7, caractérisé en ce que le diffuseur à gradins (12) débouche tangentiellement dans le récipient de flottation (10).

9. Dispositif de désencrage par flottation selon une des revendications 1 à 8, caractérisé en ce que le diffuseur à gradins (12) ou la déviation (14) débouche dans le récipient de flottation (10) tout près au dessous de la surface de la suspension formée dans le récipient de flottation (10).

10. Dispositif de désencrage par flottation selon une des revendications 1 à 6, caractérisé en ce que plusieurs diffuseurs à gradins (12) sont disposés côte à côte.
